# EUROPÄISCHE PATENTSCHRIFT

(11) **EP 3 774 462 B1**
(45) Veröffentlichungstag und Bekanntmachung des Hinweises auf die Patenterteilung: **31.07.2024**
(21) Anmeldenummer: 19712700.4
(22) Anmeldetag: 11.03.2019
(51) Int. Cl.: B60T 8/40, B60T 13/14, B60T 13/68

(54) **BREMSSYSTEM FÜR EIN FAHRZEUG MIT EINER ZUMINDEST TEILAUTOMATISIERTEN STEUERUNGSFUNKTION**
BRAKE SYSTEM FOR A VEHICLE, COMPRISING AN LEAST PARTIALLY AUTOMATED CONTROL FUNCTION
SYSTÈME DE FREINAGE POUR UN VÉHICULE DOTÉ D'UNE FONCTION DE COMMANDE AU MOINS PARTIELLEMENT AUTOMATISÉE

(30) Priorität: 29.03.2018 DE 102018204900
(43) Veröffentlichungstag der Anmeldung: 17.02.2021
(73) Patentinhaber: VOLKSWAGEN AKTIENGESELLSCHAFT, 38440 Wolfsburg (DE)
(72) Erfinder: SCHRÖDER, Stefan, 38114 Braunschweig (DE)
(86) Internationale Anmeldenummer: PCT/EP2019/055984
(87) Internationale Veröffentlichungsnummer: WO 2019/185337

(56) Entgegenhaltungen:
- EP-A1- 1 481 864
- DE-A1- 102015 117 907
- DE-B3- 102009 028 010

## Beschreibung

Die Erfindung betrifft ein Bremssystem für ein Fahrzeug, welches eine zumindest teilautomatisierte Steuerungsfunktion aufweist, nach dem Oberbegriff des unabhängigen Vorrichtungsanspruches. Ferner betrifft die Erfindung ein Fahrzeug, insbesondere ein Kraftfahrzeug bzw. KFZ, mit einem entsprechenden Bremssystem.

Zudem betrifft die Erfindung ein Verfahren zum Betreiben eines Fahrzeuges, wenn einer zumindest teilautomatisierten Steuerungsfunktion des Fahrzeuges Vorrang gewährt wird, nach dem Oberbegriff des unabhängigen Verfahrensanspruches.

Bei manchen Fahrzeugen, die über eine zumindest teilautomatisierte Steuerungsfunktion verfügen, wird der Fahrer beim Steuern des Fahrzeuges zumindest unterstützt bis gar entlastet. Als Beispiele für eine teilautomatisierte Steuerungsfunktion in einem Fahrzeug können ein Tempomat, Spurhalteassistent oder ein Abstandsregeltempomat dienen. Weiterhin kann bei manchen Fahrzeugen eine hochautomatisierte Steuerungsfunktion vorgesehen sein, bei welcher der Fahrer von routinemäßigen Aufgaben, wie z. B. Einparken oder Rangieren in einem Stau, entlastet wird. Darüber hinaus können manche Fahrzeuge mit einer vollautomatisierten Steuerungsfunktion ausgestattet sein, bei welcher der Fahrer nur in extremen Fällen in die Steuerung des Fahrzeuges eingreifen muss. Als Steigerung ist gar eine fahrerlose Steuerungsfunktion in manchen Fahrzeugen denkbar. In solchen Fahrzeugen mit einer zumindest teilautomatisierten Steuerungsfunktion ist zumeist vorgesehen, dass der Fahrer durch mechanische Eingriffe, bspw. durch Bremsen oder Lenken, die zumindest teilautomatisierte Steuerungsfunktion deaktivieren kann. Andererseits sollen rein zufällige bzw. ungewollte Eingriffe in die Steuerung des Fahrzeuges durch den Fahrer, bspw. beim versehentlichen Auftreten auf das Bremspedal, die zumindest teilautomatisierte Steuerungsfunktion nicht ausschalten. Dies könnte zu gefährlichen Situationen führen, bspw. wenn der Fahrer womöglich noch gar nicht bereit ist, die Führung des Fahrzeuges zu übernehmen. Beim ungewollten Auftreten auf das Bremspedal besteht zudem die Gefahr, dass der Fahrerfuß eingeklemmt wird. Außerdem kann das Bremspedal ungewollt durch Gegenstände blockiert werden. Die Interaktion zwischen der manuellen und zumindest teilautomatisierten Steuerungsfunktion bedarf daher einer Verbesserung.

Ein beispielhaftes Bremssystem ist ferner in der Schrift EP 1 481 864 A1 beschrieben.

Ein beispielhaftes Verfahren zum Betreiben eines Fahrzeuges ist in der Schrift DE 10 2017 117 907 A1 beschrieben.

Die Aufgabe der Erfindung ist es folglich, mindestens einen aus dem Stand der Technik bekannten Nachteil bei einem Bremssystem zumindest teilweise zu überwinden. Insbesondere ist es Aufgabe der Erfindung, ein Bremssystem für ein Fahrzeug, welches eine zumindest teilautomatisierte Steuerungsfunktion aufweist, bereitzustellen, welches einfach und kostengünstig aufgebaut ist und welches eine intuitive und sichere Interaktion zwischen einer manuellen und der zumindest teilautomatisierten Steuerungsfunktion im Betrieb des Fahrzeuges ermöglicht. Ferner ist die Aufgabe der Erfindung, ein Fahrzeug, insbesondere ein Kraftfahrzeug bzw. KFZ, mit einem entsprechenden Bremssystem bereitzustellen. Zudem ist es Aufgabe der Erfindung, ein einfaches und sicheres Verfahren zum Betreiben eines Fahrzeuges zur Verfügung zu stellen, wenn einer zumindest teilautomatisierten Steuerungsfunktion des Fahrzeuges Vorrang gewährt wird.

Die erfindungsgemäße Aufgabe wird gelöst durch ein Bremssystem für ein Fahrzeug, welches eine zumindest teilautomatisierte Steuerungsfunktion aufweist, mit den Merkmalen des unabhängigen Vorrichtungsanspruches 3, insbesondere aus dem kennzeichnenden Teil, durch ein Fahrzeug mit den Merkmalen des abhängigen Anspruchs 9 sowie durch ein Verfahren zum Betreiben eines Fahrzeuges, wenn einer zumindest teilautomatisierten Steuerungsfunktion des Fahrzeuges Vorrang gewährt wird, mit den Merkmalen des unabhängigen Verfahrensanspruchs 1, insbesondere aus dem kennzeichnenden Teil. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung sieht ein Bremssystem für ein Fahrzeug vor, wobei das Fahrzeug eine zumindest teilautomatisierte Steuerungsfunktion aufweist. Das Bremssystem ist mit einem Bremspedal zum mechanischen Betätigen durch einen Fahrer bei einem Bremswunsch und einem hydraulischen Übertragungssystem zum Leiten eines Übertragungsmediums ausgeführt, welches die Betätigung des Bremspedals durch den Fahrer an eine Radbremse überträgt. Hierzu ist es erfindungsgemäß vorgesehen, dass das Übertragungssystem einen Speicher für das Übertragungsmedium aufweist, um ein verschobenes Volumen des Übertragungsmediums beim Betätigen des Bremspedals zwischenzuspeichern, wenn der zumindest teilautomatisierten Steuerungsfunktion Vorrang gewährt wird.

Das erfindungsgemäße Bremssystem eignet sich insbesondere für Fahrzeuge mit einer manuellen, einer teilautomatisierten, einer hochautomatisierten, einer vollautomatisierten und/oder einer fahrerlosen Steuerungsfunktion.

Die Erfindung erkennt dabei, dass in Bremssystemen, die über ein hydraulisches Übertragungssystem zum Leiten eines Übertragungsmediums verfügen, eine Wirkverbindung zwischen dem Bremspedal und der Radbremse nie ganz unterbrochen werden kann, sodass eine ungewollte Betätigung des Bremspedals auf die Radbremse übertragbar ist.

Der Erfindungsgedanke liegt dabei darin, dass im Übertragungssystem zwischen dem Bremspedal und der Radbremse ein Speicher für ein verschobenes Volumen des Übertragungsmediums beim Betätigen des Bremspedals zwischengeschaltet wird. Der Speicher kann verwendet werden, wenn der zumindest teilautomatisierten Steuerungsfunktion Vorrang gewährt wird. Außerdem kann der Speicher in unterschiedlichen Modi betrieben werden. Auf diese Weise kann der Speicher die Übertragung der Bremskraft ganz verhindern oder in unterschiedlichen Stufen reduzieren. Für die stufenweise Beanspruchung des Speichers kann ein Steuerventil vorgesehen sein, welches bspw. als ein Dreiwegventil ausgebildet sein kann. Zudem ist es denkbar, dass der Speicher in einer Bypassleitung angeordnet werden kann, die nur dann freigegen werden kann, wenn die zumindest teilautomatisierte Steuerungsfunktion Vorrang hat. Im Falle einer manuellen Steuerung des Fahrzeuges kann diese Bypassleitung geschlossen werden. Wenn der Speicher in Verwendung ist, können, wie bereits oben erwähnt ist, unterschiedliche Modi realisiert werden, die in Abhängigkeit der bestimmten Steuerungsfunktion betrieben werden. Die unterschiedlichen Modi können automatisch, bspw. durch Vorliegen bestimmter Steuersignale, oder manuell, bspw. durch Betätigen des Bremspedals mit einer bestimmten Kraft, aktiviert, umgeschaltet oder deaktiviert werden. So ist es denkbar, dass ab einer bestimmten Schwelle der Bremskraft beim Betätigen des Bremspedals ein gewisser Eingriff durch den Fahrer zwecks Korrektur der Steuerung des Fahrzeuges erlaubt werden kann, ohne die zumindest teilautomatisierte Steuerungsfunktion ganz deaktivieren zu müssen. Bei einer weiteren bestimmten Schwelle der Bremskraft kann die zumindest teilautomatisierte Steuerungsfunktion ausgeschaltet werden, wenn dies gewollt, bspw. wenn der Fahrer die Steuerung des Fahrzeuges ganz übernehmen möchte, oder notwendig ist, bspw. wenn ein Notfall vorliegt und der Fahrer die Steuerung des Fahrzeuges übernehmen muss. Auch ist es denkbar, dass durch bestimmte Stellungen des Bremspedals unterschiedliche Steuerungsfunktionen umgeschaltet werden. Denkbar ist bspw. eine hierarchische Herabstufung des Automatisierungsgrades mit einem nach und nach weiter gedrückten Bremspedal. All diese Modi im Betrieb des Bremssystems können mithilfe einer Drosselung beim Einlass und/oder beim Auslass des Übertragungsmediums in bzw. aus dem Speicher erreicht werden. Wenn der Speicher nicht benötigt wird, kann das ganze Volumen des Übertragungsmediums wieder dem Flussweg des Übertragungsmediums zugefügt werden.

Ferner kann die Erfindung bei einem Bremssystem vorsehen, dass der Speicher als ein Niederdruckspeicher ausgebildet ist. Ein Niederdruckspeicher ist auf eine vorteilhafte Weise geeignet, eine einfach steuerbare, bspw. stufenweise, steuerbare Aufnahme des Übertragungsmediums zu ermöglichen.

Weiterhin kann die Erfindung bei einem Bremssystem vorsehen, dass der Speicher ein Steuerventil aufweist. Mithilfe des Steuerventils kann eine Drosselung beim Einlass und Auslass des Übertragungsmediums in bzw. aus dem Speicher ermöglicht werden. Zudem ist es denkbar, dass das Steuerventil ein Dreiwegventil ist. Mithilfe eines Dreiwegventils kann der Speicher auf eine einfache Weise dem Flussweg des Übertragungsmediums zugeschaltet oder abgeschaltet werden. In einer Schaltstellung kann das Dreiwegventil den Speicher einfach überbrücken.

Des Weiteren kann die Erfindung bei einem Bremssystem vorsehen, dass der Speicher einen Freilassmechanismus aufweist, um in einer Notfallsituation, insbesondere ungeachtet der zumindest teilautomatisierten Steuerungsfunktion des Fahrzeuges, ein zwischengespeichertes Volumen des Übertragungsmediums freizulassen, wenn die Kraft, mit welcher der Fahrer das Bremspedal betätigt, eine Notfallschwelle übersteigt und/oder wenn ein Crashsignal vorliegt. Dabei ist es denkbar, dass der Freilassmechanismus innerhalb des Steuerventils umgesetzt werden kann, um Kosten und Bauteile im Bremssystem zu sparen. Weiterhin ist es denkbar, dass der Freilassmechanismus unabhängig vom Steuerventil umgesetzt werden kann und eine Art Überlastsicherung darstellen kann, die in einem Notfall das ganze Volumen des Übertragungsmediums wieder dem Flussweg des Übertragungsmediums zufügt, damit ein Bremsen des Fahrzeuges in brenzligen Situationen nicht gehindert ist.

Zudem kann die Erfindung bei einem Bremssystem vorsehen, dass das Übertragungssystem eine elektromechanische Verstärkungsvorrichtung aufweist, um die Kraft, mit welcher der Fahrer das Bremspedal betätigt, zu verstärken. Die Verstärkungsvorrichtung kann dabei als ein elektromechanischer Bremskraftverstärker ausgebildet sein. Vorteilhafterweise ist es denkbar, dass die Verstärkungsvorrichtung aktivierbar ist, wenn einer manuellen Steuerungsfunktion des Fahrzeuges durch den Fahrer Vorrang gewährt wird, und dass die Verstärkungsvorrichtung deaktivierbar ist, wenn der zumindest teilautomatisierten Steuerungsfunktion des Fahrzeuges Vorrang gewährt wird. Ohne die Bremskraftverstärkung wird eine etwaige ungewollte Betätigung des Bremspedals weniger stark auf die Radbremse übertragen. Mithilfe des erfindungsgemäßen Speichers kann außerdem eine Entkoppelung des Bremspedals von der Radbremse ermöglicht werden.

Außerdem kann die Verstärkungsvorrichtung einen Aktivierungsmechanismus aufweisen, um in einer Notfallsituation, insbesondere ungeachtet der zumindest teilautomatisierten Steuerungsfunktion des Fahrzeuges, die Verstärkungsvorrichtung zu aktivieren, wenn die Kraft, mit welcher der Fahrer das Bremspedal betätigt, eine Notfallschwelle übersteigt und/oder wenn ein Crashsignal vorliegt. Somit kann der gewohnte manuelle Betrieb des Bremssystems wieder hergestellt werden.

Ferner kann eine Steuervorrichtung für das Bremssystem vorgesehen sein, die mit einem Sensorsystem des Fahrzeuges in Kommunikationsverbindung steht, um eine Steuerungsfunktion mit einem Vorrang zu verifizieren und die zumindest teilautomatisierte Steuerungsfunktion oder eine manuelle Steuerungsfunktion des Fahrzeuges bereitzustellen. Die Steuervorrichtung kann dabei vorzugsweise eine zentrale Steuervorrichtung des Fahrzeuges sein. Somit kann mit vorhandenen Mitteln im Fahrzeug ermöglicht werden, dass das nachfolgend beschriebene erfindungsgemäße Verfahren zum Betreiben eines Fahrzeuges ausgeführt werden kann.

Weiterhin sieht die Erfindung ein Fahrzeug mit einem Bremssystem vor, welches, wie oben beschrieben ist, ausgebildet sein kann. Mithilfe des erfindungsgemäßen Fahrzeuges werden die gleichen Vorteile erreicht, die oben im Zusammenhang mit dem erfindungsgemäßen Bremssystem beschrieben wurden. Zur Vermeidung von Wiederholungen wird vorliegend vollumfänglich darauf Bezug genommen.

Des Weiteren sieht die Erfindung ein Verfahren zum Betreiben eines Fahrzeuges, wenn einer zumindest teilautomatisierten Steuerungsfunktion des Fahrzeuges Vorrang gewährt wird, mithilfe eines Bremssystems, welches mit einem Bremspedal zum mechanischen Betätigen durch einen Fahrer bei einem Bremswunsch und einem hydraulischen Übertragungssystem zum Leiten eines Übertragungsmediums ausgebildet ist, welches die Betätigung des Bremspedals durch den Fahrer an eine Radbremse überträgt. Das Verfahren weist dabei folgende Schritte auf:
a) Überprüfen von Steuerungsfunktionen des Fahrzeuges, um eine Steuerungsfunktion mit einem Vorrang zu verifizieren,
b) Deaktivieren einer Verstärkungsvorrichtung für die Kraft beim Betätigen des Bremspedals, wenn im Schritt a) einer zumindest teilautomatisierten Steuerungsfunktion des Fahrzeuges Vorrang gewährt wird,
c) Zwischenspeichern eines verschobenen Volumens des Übertragungsmediums beim Betätigen des Bremspedals, bevor das Übertragungsmedium die Radbremse erreicht hat.

Mithilfe des erfindungsgemäßen Verfahrens wird ein ungewolltes Eingreifen in die Steuerung des Fahrzeuges auf eine sichere Weise verhindert, wenn der zumindest teilautomatisierten Steuerungsfunktion des Fahrzeuges Vorrang gewährt wird. Außerdem werden mithilfe des erfindungsgemäßen Verfahrens die gleichen Vorteile erreicht, die oben im Zusammenhang mit dem erfindungsgemäßen Bremssystem beschrieben wurden. Zur Vermeidung von Wiederholungen wird vorliegend vollumfänglich darauf Bezug genommen.

Zudem kann das Verfahren im Sinne der Erfindung mindestens einen weiteren Schritt aufweisen:
d) Drosseln des Übertragungsmediums beim Einlass in einen Speicher, wenn der zumindest teilautomatisierten Steuerungsfunktion des Fahrzeuges ein beschränkter Vorrang gewährt wird, oder
e) Freilassen des Übertragungsmediums in einer Notfallsituation, insbesondere ungeachtet der zumindest teilautomatisierten Steuerungsfunktion des Fahrzeuges, wenn die Kraft, mit welcher der Fahrer das Bremspedal betätigt, eine Notfallschwelle übersteigt und/oder wenn ein Crashsignal vorliegt.

Der Schritt d) kann bei einem Korrekturwunsch der zumindest teilautomatisierten Steuerungsfunktion durch den Fahrer vorteilhaft sein, ohne die zumindest teilautomatisierte Steuerungsfunktion auszuschalten. Mithilfe des Schrittes e) kann ein sicheres Eingreifen in die Steuerung des Fahrzeuges durch den Fahrer gewährleistet werden.

Weitere, die Erfindung verbessernde Maßnahmen werden nachstehend mit der Beschreibung eines bevorzugten Ausführungsbeispiels der Erfindung anhand der Figur näher dargestellt. Dabei ist zu beachten, dass die Figur nur einen beschreibenden Charakter hat und nicht dazu gedacht ist, die Erfindung in irgendeiner Form einzuschränken. Es zeigt:

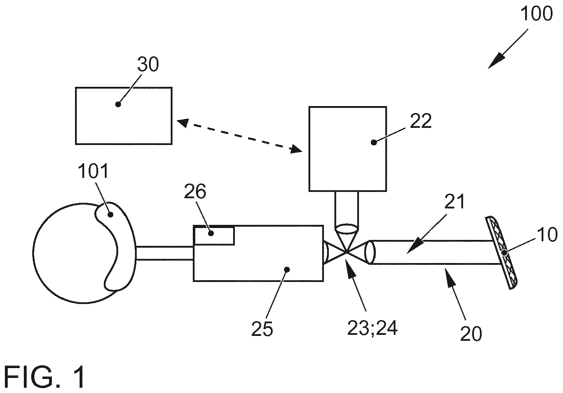

Fig. 1 eine schematische Darstellung eines erfindungsgemäßen Bremssystems.

Die Figur 1 zeigt ein Bremssystem 100 für ein Fahrzeug im Sinne der Erfindung, wobei das Fahrzeug eine zumindest teilautomatisierte Steuerungsfunktion aufweist. Als mögliche Steuerungsfunktionen des Fahrzeuges sind dabei eine rein manuelle, eine teilautomatisierte, eine hochautomatisierte, eine vollautomatisierte und eine autonome bzw. fahrerlose Steuerungsfunktion denkbar.

Das Bremssystem 100 ist dabei mit einem beweglichen Bremspedal 10 ausgebildet, das durch eine Bewegung eines Fahrerfußes im Normalbetrieb einer manuellen Steuerungsfunktion betätigt wird. Vom Bremspedal 10 geht ein hydraulisches Übertragungssystem 20 ab, welches ein Übertragungsmedium 21, bspw. eine Bremsflüssigkeit, leitet. Das Übertragungsmedium 21 überträgt die Bremskraft bei einem Betätigen des Bremspedals 10 durch den Fahrer an eine Radbremse 101. Im Rahmen des erfindungsgemäßen Übertragungssystems 20 ist ein Speicher 22 für das Übertragungsmedium 21 vorgesehen, um ein verschobenes Volumen des Übertragungsmediums 21 beim Betätigen des Bremspedals 10 zwischenzuspeichern, wenn der zumindest teilautomatisierten Steuerungsfunktion Vorrang gewährt wird.

Vorteilhafterweise schafft der Speicher 22 eine Entkoppelung der Wirkverbindung zwischen dem Bremspedal 10 und der Radbremse 101 in einem hydraulischen Übertragungssystem 20. Vorteilhafterweise kann durch den Speicher 22 eine ungewollte Betätigung des Bremspedals 10 abgegriffen werden, sodass die Radbremse 101 beim zumindest teilweise automatisierten Fahren nicht aus Versehen betätigt wird.

Der Speicher 22 ist erfindungsgemäß zwischen dem Bremspedal 10 und der Radbremse 101 verschaltet. Der Speicher 22 kann insbesondere dann auf eine vorteilhafte Weise verwendet werden, wenn der zumindest teilautomatisierten Steuerungsfunktion gegenüber einer manuellen Steuerungsfunktion oder gegenüber einer weiteren zumindest teilautomatisierten Steuerungsfunktion Vorrang gewährt wird.

Im Rahmen der Erfindung kann der Speicher 22 in unterschiedlichen Modi verwendet werden. So kann der Speicher 22 die Übertragung der Bremskraft ganz verhindern, indem er das ganze verschobene Volumen des Übertragungsmediums 21 aufnimmt, oder in unterschiedlichen Stufen reduzieren, wenn das verschobene Volumen des Übertragungsmediums 21 nur zum Teil aufgenommen oder gedrosselt wird. Für eine gradierte oder stufenweise Beanspruchung des Speichers 22 kann ein Steuerventil 23 vorgesehen sein, welches bspw. als ein Dreiwegventil ausgebildet sein kann. Das Steuerventil 23 kann den Speicher 22 freigegen, wenn die zumindest teilautomatisierte Steuerungsfunktion Vorrang hat. Im Falle einer manuellen Steuerung des Fahrzeuges kann das Steuerventil 23 einen ungehinderten Fluss des Übertragungsmediums 21 am Speicher 22 vorbei ermöglichen.

Wenn der Speicher 22 beansprucht wird, können unterschiedliche Modi realisiert werden, die in Abhängigkeit der bestimmten Steuerungsfunktion umgesetzt werden. Die unterschiedlichen Modi können automatisch, bspw. durch Vorliegen bestimmter Steuersignale, bspw. von einer Steuervorrichtung 30, oder manuell, bspw. durch Betätigen des Bremspedals 10 mit einer bestimmten Kraft, aktiviert, umgeschaltet und deaktiviert werden. So ist es denkbar, dass ab einer bestimmten Schwelle der Bremskraft beim Betätigen des Bremspedals 10 durch den Fahrer ein gewisser Eingriff durch den Fahrer in die Steuerung des Fahrzeuges erlaubt werden kann, um eine, wenn auch leichte, Korrektur der Steuerung vorzunehmen, ohne die zumindest teilautomatisierte Steuerungsfunktion ganz zu deaktivieren. Bei einer weiteren bestimmten Schwelle der Bremskraft kann die zumindest teilautomatisierte Steuerungsfunktion ausgeschaltet werden. Solche Situationen sind denkbar, wenn der Fahrer die Steuerung des Fahrzeuges übernehmen möchte oder in einem Notfall muss. Auch ist es denkbar, dass durch bestimmte Stellungen des Bremspedals 10 zwischen unterschiedlichen teilautomatisierten Steuerungsfunktionen umgeschaltet werden kann. Denkbar ist bspw. eine hierarchische Herabstufung des Automatisierungsgrades.

Unterschiedliche Modi im Betrieb des erfindungsgemäßen Bremssystems 100 können mithilfe einer Drosselung beim Einlass und/oder beim Auslass des Übertragungsmediums 21 in bzw. aus dem Speicher 22 erreicht werden. Wenn der Speicher 22 nicht benötigt wird, bspw. bei einer manuellen Steuerungsfunktion des Fahrzeuges, kann das ganze Volumen des Übertragungsmediums 21 wieder dem Flussweg des Übertragungsmediums 21 zufügt werden.

Ferner kann der Speicher 22 einen Freilassmechanismus 24 aufweisen, um in einer Notfallsituation ein zwischengespeichertes Volumen des Übertragungsmediums 21 freizulassen. Eine Notfallsituation kann z. B. dann erfasst werden, wenn die Kraft, mit welcher der Fahrer das Bremspedal 10 betätigt, eine Notfallschwelle Sn übersteigt und/oder wenn ein Crashsignal, bspw. von einer Steuervorrichtung 30, vorliegt.

Weiterhin kann im Übertragungssystem 20 eine elektromechanische Verstärkungsvorrichtung 25 vorgesehen sein, um die Kraft, mit welcher der Fahrer das Bremspedal 10 bei einer manuellen Steuerungsfunktion betätigt, zu verstärken. Die Verstärkungsvorrichtung 25 kann vorteilhafterweise deaktiviert werden, wenn der zumindest teilautomatisierten Steuerungsfunktion des Fahrzeuges Vorrang gewährt wird. Die Verstärkungsvorrichtung 25 kann ebenfalls einen Aktivierungsmechanismus 26 aufweisen, um in einer Notfallsituation aktiviert zu werden.

Somit kann vorteilhafterweise in einer Notfallsituation sichergestellt werden, dass der Fahrer die Kontrolle über das Bremssystem 100 hat.

Die Steuervorrichtung 30 kann bspw. als eine zentrale Steuervorrichtung 30 des Fahrzeuges ausgebildet sein.

Die voranstehende Beschreibung der Figuren beschreibt die vorliegende Erfindung ausschließlich im Rahmen eines Beispiels. Selbstverständlich können Änderungen im Rahmen des durch die Ansprüche definierten Schutzumfangs vorgenommen werden.

### Bezugszeichenliste

- 100: Bremssystem
- 101: Radbremse

- 10: Bremspedal

- 20: Übertragungssystem
- 21: Übertragungsmedium
- 22: Speicher
- 23: Steuerventil
- 24: Freilassmechanismus
- 25: Verstärkungsvorrichtung
- 26: Aktivierungsmechanismus

- 30: Steuervorrichtung

## Patentansprüche

1. Verfahren zum Betreiben eines Fahrzeuges, wenn einer zumindest teilautomatisierten Steuerungsfunktion des Fahrzeuges Vorrang gewährt wird, mithilfe eines Bremssystems (100), welches mit:
einem Bremspedal (10) zum mechanischen Betätigen durch einen Fahrer bei einem Bremswunsch
und einem hydraulischen Übertragungssystem (20) zum Leiten eines Übertragungsmediums (21) ausgebildet ist,
welches die Betätigung des Bremspedals (10) durch den Fahrer an eine Radbremse (101) überträgt,
**dadurch gekennzeichnet,**
**dass** das Verfahren folgende Schritte aufweist:
a) Überprüfen einer Steuerungsfunktion des Fahrzeuges, um eine Steuerungsfunktion mit einem Vorrang zu verifizieren,
b) Deaktivieren einer Verstärkungsvorrichtung (25) für die Kraft beim Betätigen des Bremspedals (10), wenn im Schritt a) einer zumindest teilautomatisierten Steuerungsfunktion des Fahrzeuges Vorrang gewährt wird,
c) Zwischenspeichern eines verschobenen Volumens des Übertragungsmediums (21) beim Betätigen des Bremspedals (10), bevor das Übertragungsmedium die Radbremse (101) erreicht hat.

2. Verfahren nach dem vorhergehenden Anspruch,
**dadurch gekennzeichnet,**
**dass** das Verfahren mindestens einen weiteren Schritt aufweist:
d) Drosseln des Übertragungsmediums (21) beim Einlass in einen Speicher (22), wenn der zumindest teilautomatisierten Steuerungsfunktion des Fahrzeuges ein beschränkter Vorrang gewährt wird, oder
e) Freilassen des Übertragungsmediums (21) in einer Notfallsituation, wenn die Kraft, mit welcher der Fahrer das Bremspedal (10) betätigt, eine Notfallschwelle übersteigt und/oder wenn ein Crashsignal vorliegt.

3. Bremssystem (100) für ein Fahrzeug, welches eine zumindest teilautomatisierte Steuerungsfunktion aufweist, welches zum Durchführen eines Verfahrens nach einem der vorhergehenden Ansprüche ausgeführt ist, mit:
einem Bremspedal (10) zum mechanischen Betätigen durch einen Fahrer bei einem Bremswunsch
und einem hydraulischen Übertragungssystem (20) zum Leiten eines Übertragungsmediums (21),
welches die Betätigung des Bremspedals (10) durch den Fahrer an eine Radbremse (101) überträgt,
**dadurch gekennzeichnet,**
**dass** das Übertragungssystem (20) einen Speicher (22) für das Übertragungsmedium (21) aufweist, um ein verschobenes Volumen des Übertragungsmediums (21) beim Betätigen des Bremspedals (10) zwischenzuspeichern, wenn der zumindest teilautomatisierten Steuerungsfunktion Vorrang gewährt wird.

4. Bremssystem (100) nach Anspruch 3,
**dadurch gekennzeichnet,**
**dass** der Speicher (22) als ein Niederdruckspeicher ausgebildet ist.

5. Bremssystem (100) nach Anspruch 3 oder 4,
**dadurch gekennzeichnet,**
**dass** der Speicher (22) ein Steuerventil (23) aufweist,
und/oder dass das Steuerventil (23) ein Dreiwegventil ist.

6. Bremssystem (100) nach dem vorhergehenden Anspruch,
**dadurch gekennzeichnet,**
**dass** der Speicher (22) einen Freilassmechanismus (24) aufweist, um in einer Notfallsituation ein zwischengespeichertes Volumen des Übertragungsmediums (21) freizulassen, wenn die Kraft, mit welcher der Fahrer das Bremspedal (10) betätigt, eine Notfallschwelle übersteigt und/oder wenn ein Crashsignal vorliegt.

7. Bremssystem (100) nach einem der vorhergehenden Ansprüche,
**dadurch gekennzeichnet,**
**dass** das Übertragungssystem (20) eine elektromechanische Verstärkungsvorrichtung (25) aufweist, um die Kraft, mit welcher der Fahrer das Bremspedal (10) betätigt, zu verstärken,
wobei die Verstärkungsvorrichtung (25) aktivierbar ist, wenn einer manuellen Steuerungsfunktion des Fahrzeuges durch den Fahrer Vorrang gewährt wird,
und wobei die Verstärkungsvorrichtung (25) deaktivierbar ist, wenn der zumindest teilautomatisierten Steuerungsfunktion des Fahrzeuges Vorrang gewährt wird.

8. Bremssystem (100) nach dem vorhergehenden Anspruch,
**dadurch gekennzeichnet,**
**dass** die Verstärkungsvorrichtung (25) einen Aktivierungsmechanismus (26) aufweist, um in einer Notfallsituation die Verstärkungsvorrichtung (25) zu aktivieren, wenn die Kraft, mit welcher der Fahrer das Bremspedal (10) betätigt, eine Notfallschwelle übersteigt und/oder wenn ein Crashsignal vorliegt.

9. Fahrzeug mit einem Bremssystem (100) nach einem der vorhergehenden Ansprüche.

## Claims

1. Method for operating a vehicle when an at least partially automated control function of the vehicle is granted priority,
using a brake system (100) which is designed with:
a brake pedal (10) to be mechanically actuated by a driver for making a braking request
and a hydraulic transmission system (20) for conducting a transmission medium (21)
which transmits the actuation of the brake pedal (10) by the driver to a wheel brake (101),
**characterized**
**in that** the method comprises the following steps:
a) checking a control function of the vehicle in order to verify a control function with a priority,
b) deactivating an amplification device (25) for the force when the brake pedal (10) is actuated when an at least partially automated control function of the vehicle is granted priority in step a),
c) temporarily storing a displaced volume of the transmission medium (21) when the brake pedal (10) is actuated, before the transmission medium has reached the wheel brake (101).

2. Method according to the preceding claim,
**characterized**
**in that** the method comprises at least one further step:
d) throttling the transmission medium (21) as it is admitted into a reservoir (22) when the at least partially automated control function of the vehicle is granted a limited priority, or
e) releasing the transmission medium (21) in an emergency situation when the force with which the driver actuates the brake pedal (10) exceeds an emergency threshold and/or when a crash signal is present.

3. Brake system (100) for a vehicle, which has an at least partially automated control function which is designed to carry out a method according to either of the preceding claims, comprising:
a brake pedal (10) to be mechanically actuated by a driver for a braking request
and a hydraulic transmission system (20) for conducting a transmission medium (21)
which transmits the actuation of the brake pedal (10) by the driver to a wheel brake (101),
**characterized**
**in that** the transmission system (20) has a reservoir (22) for the transmission medium (21) in order to temporarily store a displaced volume of the transmission medium (21) when the brake pedal (10) is actuated when the at least partially automated control function is granted priority.

4. Brake system (100) according to Claim 3,
**characterized**
**in that** the reservoir (22) is designed as a low-pressure reservoir.

5. Brake system (100) according to Claim 3 or 4,
**characterized**
**in that** the reservoir (22) has a control valve (23), and/or in that the control valve (23) is a three-way valve.

6. Brake system (100) according to the preceding claim,
**characterized**
**in that** the reservoir (22) has a release mechanism (24) in order to release a temporarily stored volume of the transmission medium (21) in an emergency situation when the force with which the driver actuates the brake pedal (10) exceeds an emergency threshold and/or when a crash signal is present.

7. Brake system (100) according to any of the preceding claims,
**characterized**
**in that** the transmission system (20) has an electromechanical amplification device (25) in order to amplify the force with which the driver actuates the brake pedal (10),
wherein the amplification device (25) can be activated when a manual control function of the vehicle by the driver is granted priority,
and wherein the amplification device (25) can be deactivated when the at least partially automated control function of the vehicle is granted priority.

8. Brake system (100) according to the preceding claim,
**characterized**
**in that** the amplification device (25) has an activation mechanism (26) in order to activate the amplification device (25) in an emergency situation when the force with which the driver actuates the brake pedal (10) exceeds an emergency threshold and/or when a crash signal is present.

9. Vehicle comprising a brake system (100) according to any of the preceding claims.

## Revendications

1. Procédé de fonctionnement d'un véhicule lorsque la priorité est donnée à une fonction de commande au moins partiellement automatisée du véhicule, à l'aide d'un système de freinage (100) qui est conçu avec :
une pédale de frein (10) destinée à être actionnée mécaniquement par un conducteur lorsqu'un freinage est souhaité
et un système de transmission hydraulique (20) destiné à conduire un milieu de transmission (21) qui transmet l'actionnement de la pédale de frein (10), effectué par le conducteur, à un frein de roue (101),
**caractérisé en ce que**
le procédé comporte les étapes suivantes :
a) vérifier une fonction de commande du véhicule afin de vérifier si une fonction de commande a une priorité,
b) désactiver un dispositif (25) d'amplification de la force lors de l'actionnement de la pédale de frein (10) si à l'étape a) une fonction de commande au moins partiellement automatisée du véhicule a une priorité,
c) stocker temporairement un volume déplacé du milieu de transmission (21) lorsque la pédale de frein (10) est actionnée avant que le milieu de transmission n'atteigne le frein de roue (101).

2. Procédé selon la revendication précédente, **caractérisé en ce que** le procédé comporte au moins une étape supplémentaire :
d) restreindre le milieu de transmission (21) lorsqu'il entre dans un accumulateur (22) si la fonction de commande au moins partiellement automatisée du véhicule a une priorité limitée, ou
e) libérer le milieu de transmission (21) dans une situation d'urgence lorsque la force avec laquelle le conducteur actionne la pédale de frein (10) dépasse un seuil d'urgence et/ou lorsqu'un signal de collision est présent.

3. Système de freinage (100) destiné à un véhicule qui comporte une fonction de commande au moins partiellement automatisée, destiné à mettre en œuvre un procédé selon l'une des revendications précédentes, ledit système de freinage comprenant :
une pédale de frein (10) destinée à être actionnée mécaniquement par un conducteur lorsqu'un freinage est souhaité
et un système de transmission hydraulique (20) destiné à conduire un milieu de transmission (21) qui transmet l'actionnement de la pédale de frein (10), effectué par le conducteur, à un frein de roue (101),
**caractérisé en ce que**
le système de transmission (20) comporte un accumulateur (22) destiné au milieu de transmission (21) afin de stocker temporairement un volume déplacé du milieu de transmission (21) lorsque la pédale de frein (10) est actionnée si la fonction de commande au moins partiellement automatisée a une priorité.

4. Système de freinage (100) selon la revendication 3,
**caractérisé en ce que**
l'accumulateur (22) est conçu comme un accumulateur à basse pression.

5. Système de freinage (100) selon la revendication 3 ou 4,
**caractérisé en ce que**
l'accumulateur (22) comporte une vanne de régulation (23)
et/ou la vanne de régulation (23) est une vanne à trois voies.

6. Système de freinage (100) selon la revendication précédente,
**caractérisé en ce que**
l'accumulateur (22) comporte un mécanisme de libération (24) destiné à libérer un volume de milieu de transmission (21), stocké temporairement, dans une situation d'urgence si la force avec laquelle le conducteur actionne la pédale de frein (10) dépasse un seuil d'urgence et/ou si un signal de collision est présent.

7. Système de freinage (100) selon l'une des revendications précédentes,
**caractérisé en ce que**
le système de transmission (20) comporte un dispositif d'amplification électromécanique (25) destiné à amplifier la force avec laquelle le conducteur actionne la pédale de frein (10),
le dispositif d'amplification (25) pouvant être activé lorsque le conducteur donne une priorité à une fonction de commande manuelle du véhicule, et le dispositif d'amplification (25) pouvant être désactivé si la fonction de commande au moins partiellement automatisée du véhicule a une priorité.

8. Système de freinage (100) selon la revendication précédente,
**caractérisé en ce que**
le dispositif d'amplification (25) comporte un mécanisme d'activation (26) destiné à activer le dispositif d'amplification (25) dans une situation d'urgence lorsque la force avec laquelle le conducteur actionne la pédale de frein (10) dépasse un seuil d'urgence et/ou lorsqu'un signal de collision est présent.

9. Véhicule comprenant un système de freinage (100) selon l'une des revendications précédentes.
